# EUROPÄISCHE PATENTSCHRIFT

(11) **EP 2 065 077 B1**
(45) Veröffentlichungstag und Bekanntmachung des Hinweises auf die Patenterteilung: **04.01.2012**
(21) Anmeldenummer: 08169206.3
(22) Anmeldetag: 14.11.2008
(51) Int. Cl.: A63B 7/08, A63B 71/02, A44B 11/02, F16B 45/02

(54) **Set für die Installation einer Slackline**
Set for the installation of a slackline
Ensemble pour l'installation d'un slackline

(30) Priorität: 16.11.2007 DE 102007055070; 15.01.2008 DE 102008004554
(43) Veröffentlichungstag der Anmeldung: 03.06.2009
(73) Patentinhaber: Helfrich, Jörg, 78464 Konstanz (DE); Müller, Tillmann, 78464 Konstanz (DE)
(72) Erfinder: Helfrich, Jörg, 78464 Konstanz (DE); Müller, Tillmann, 78464 Konstanz (DE)

(56) Entgegenhaltungen:
- DE-A1- 2 946 420
- DE-U1-202007 013 301
- US-A- 5 217 092
- US-A- 6 095 282
- US-A1- 2006 185 934

## Beschreibung

### Technisches Gebiet

Die Erfindung bezieht sich auf ein Set für die Installation einer Slackline aus mindestens einem Rundschlingenset sowie der Line selbst zum Aufnehmen von einem oder mehreren Bänden.

### Definitionen

### Slackline

Unter dem Begriff Slackline ist eine Vorrichtung zu verstehen, die im Wesentlichen ein Band umfasst, das zwischen zwei Fixpunkten gespannt ist. Hierbei ist man bestrebt, auf dem relativ niedrig über dem Boden gespannten Band, ungefähr Knie-oder Hüfthöhe, zu balancieren oder entsprechende Tricks auszuführen.

### Öse

Eine Öse ist ein in sich geschlossenes Element, welches ringartig ausgebildet ist. Die Öse kann auch Auge genannt werden. Sie dient dazu, ein Element, wie beispielsweise einen Schäkel, aufzunehmen.

### Schäkel

Unter einem Schäkel versteht man einen U-förmigen mit einem Schraub- oder Steckbolzen verschliessbaren Bügel. Er dient zum Verbinden von zwei Teilen, insbesondere einer Öse mit dem Schäkel. Gefertigt wird ein Schäkel zumeist aus Stahl oder Edelstahl. Fertigungsverfahren, wie Giessen oder Schmieden sind auch vorgesehen und üblich.

### Linelocker

Linelocker ist ein Funktionselement, das die Ausbildung eines in sich geschlossenen Kettenglieds aufweist. Es besteht in der Regel aus Stahl, Edelstahl oder einem Gussmaterial. Es dient dazu, mit einem flach ausgestalteten Band eine Schlaufe bereitzustellen, ohne eine Verknotung vornehmen zu müssen.

### Band

Hinter dem Begriff Band ist eine eine definierte Länge umfassende Line zu verstehen, deren Breite wesentlich grösser ist, als die Dicke. Für die vorgesehene Erfindung werden Bänder eingesetzt, die auf Zug belastet werden können. Solche Bänder sind auch aus dem Transportbereich bekannt. Sie werden dafür verwendet, entsprechende Güter zu verzurren.

### Flaschenzug

Ein Flaschenzug ist eine Einrichtung, die den Betrag der aufzubringenden Kraft verringert. Insbesondere im Bergsport ist der so genannte Bauernflaschenzug bekannt.

### Installationsvorrichtung

Unter dem Begriff Installationsvorrichtung sind alle Hilfsmittel zu verstehen, die notwendig sind, um eine Line zwischen zwei Fixpunkten zu spannen. Hierzu zählen Rundschlingen, Spannmittel und Sicherungsmittel.

### Hintergrund der Erfindung

Eine Slackline besteht im Wesentlichen aus drei Elementen, nämlich einem ersten Fixpunkt, einem zweiten Fixpunkt und einem zwischen den beiden Fixpunkten gespannten Band. Dieses Band wird auch in Fachkreisen "Line" (gesprochen "lain") genannt.

Der erste Fixpunkt ist in der Regel als Rundschlinge ausgebildet und wird beispielsweise an einem Baum befestigt, indem das freie Ende eines Seiles, das die Rundschlinge bildet, durch eine Öse gezogen wird. Dadurch wird durch den Zug an dem freien Ende die Öse weiter in Richtung des Fixpunktes (Baum) bewegt, sodass, je nach Umfang des Fixpunktes, die Rundschlinge mehr oder weniger an dem Baum anliegt.

Eine Alternative hierzu kann derart gebildet werden, dass ein Band, das an seinem freien Ende jeweils eine Öse aufweist, um den Fixpunkt gelegt wird, wobei von den Ösen ein Schäkel/Karabinerhaken aufgenommen wird, der die Rundschlinge zusammenfügt. Voraussetzung bei dieser Ausführung ist es, dass die Rundschlinge in Bezug auf den Fixpunkt ausreichend lang ist, sodass ein Überspannen der Rundschlinge vermieden wird. Auch nur auf diese Weise ist es möglich, den Karabinerhaken beziehungsweise den Schäkel in die Ösen einzuführen.

Um nun die Line zwischen den beiden Fixpunkten zu spannen, ist zusätzlich eine aus dem Stand der Technik bekannte Ratsche vorgesehen. Die Line wird zwischen den Fixpunkten auf den Boden gelegt, wobei ein freies Ende in die Schlitzwelle der Ratsche eingelegt wird. Das andere freie Ende, was der Ratsche gegenüber liegt, wird unmittelbar über eine Öse in dem Schäkel befestigt. Zum Spannen der Line wird die Ratsche hin und her bewegt, bis die Line gespannt ist. Ein Nachspannen der Line ist möglich.

Alternativ hierzu wird gemäss dem Stand der Technik vorgeschlagen, ein Flaschenzug zwischen dem Fixpunkt und dem einen Ende der Line anzuordnen. So genannte Linelocker dienen dazu, Ösen beziehungsweise Augen in der bandartigen Line zu bilden.

Anstelle der Linelockers können auch genähte Augen oder Knoten verwendet werden.

Alternativ zu den bereits beschriebenen Rundschlingen an den Fixpunkten, sind auch solche Systeme vorgesehen, die es erlauben, das als Rundschlinge ausgebildete Band durch ein Schnallenelement zu fädeln, sodass die Länge der Rundschlinge an den Baum angepasst werden kann. Zur Anpassung der Rundschlinge und des Fixpunktes ist es dann aber erforderlich, das Band wieder durch das Schnallenelement zurückzufädeln. Insbesondere im Bereich des Klettersports und der Seilsicherungstechnik sind solche Ausbildungen bekannt.

So ist z. B. aus der DE 29 46 420 A1 im Zusammenhang mit der Kletter- und Sicherungstechnik eine Einrichtung zum Abbremsen des möglichen Absturzes eines Bergsteigers bzw. zu dessen Selbstsicherung beschrieben, bei der die beiden Trums einer Schlinge mit geknoteten Enden wechselseitig durch vier einander parallele Schlitze einer Bremsplatte geführt werden, die noch zusätzlich eine Öse zum Einhaken z. B. eines so genannten Karabinerhakens aufweist. In die selbe Richtung gehen z. B. auch die US 5,217,092 und US 6,095,282, die Vorrichtungen zur Selbstsicherung insbesondere bei einem Abstieg eines Kletterers beschreiben.

Aus der DE202007013301-U1 ist ein Set für die Installation einer Slackline bekannt.

### Nachteile des Standes der Technik

Insbesondere die standardisiert ausgebildeten Rundschlingen weisen den Nachteil auf, dass sie eine hohe Scheuerwirkung in Bezug auf den Fixpunkt haben. Insbesondere dann, wenn der Fixpunkt ein Baum ist, bewirken solche Rundschlingen ein Ablösen der Baumrinde, da aufgrund der Bewegung der Line eine grosse Auf- und Abbewegung der Rundschlinge ermöglicht wird.

Ein weiterer wesentlicher Nachteil ergibt sich dadurch, dass die Rundschlinge, insbesondere beim Aufbau der Slackline, nicht auf der gewünschten Höhe am Baum bleibt, da die Länge der Schlinge nicht auf den Durchmesser des Fixpunktes abgebildet ist und so in der Höhe sehr variabel ist. Bewegt man sich zum weiteren Fixpunkt, so fällt die Rundschlinge herunter und es ist sehr mühsam, wieder in iterativen Schritten die Höhe zu erreichen. In der Regel muss dann mit zwei Personen gearbeitet werden oder eben ein ständiges hin- und herlaufen ist notwendig.

Die aus dem Stand der Technik bekannten verstellbaren Rundschlingen weisen einen wesentlichen Nachteil auf, nämlich dass sie eine sehr geringe Auflagefläche an den Fixpunkten haben. Dadurch wirken sie, insbesondere beim Fixieren an Bäumen, messerartig und lösen so die Rinde.

Aufgrund dessen, dass die verstellbaren Rundschlingen in der Regel aus einem sehr schmalen Band bestehen, das einfach um den Baum gelegt ist, ist die Auflagefläche an dem Fixpunkt nicht sehr gross. Dadurch wirken punktuelle Kräfte, die zu entsprechenden Beschädigungen führen.

Das vorgesehene Rundschlingensystem ist vor der Anbringung einmal an den entsprechenden Durchmesser des Fixpunktes angepasst. Soll dieses wieder entnommen werden beziehungsweise entfernt werden oder an den entsprechenden Durchmesser wieder angepasst werden (weil es sich beispielsweise gelöst hat), ist es notwendig, zuerst das Band zurückzufädeln und dann neu zu justieren.

Die zuvor vorgestellten Elemente, wie Linelockerprinzip und das genähte Auge, aber auch Knoten, zur Befestigung der Line an den Fixpunkten, haben ebenfalls immense Nachteile. In Anwendung des Linelockerprinzips kann die Line nicht nachträglich in der Länge verstellt werden. Dies bedeutet, dass die gespannte Länge zum anderen Fixpunkt im vorhinein sehr gut abgeschätzt werden muss. Dies bedeutet wiederum zum Aufbau einen höheren Zeitaufwand. Zudem muss mehr Material hinzu gegeben werden, was sich in den Kosten niederschlägt. Das Linelockerprinzip führt ebenfalls dazu, dass die Bruchlast der Line um circa ein Drittel verringert wird.

Im Gegenzug bietet das genähte Auge keine Möglichkeit, die entsprechende Längenverstellung durchzuführen, dass heisst das Rastband muss mit dem anderen Fixpunkt komplett durch die Ratsche oder den Flaschenzug aufgenommen werden. Dies bedeutet ebenfalls einen hohen Zeitaufwand. Knoten in diesem Bereich führen dazu, dass die Bruchlast der Line um die Hälfte reduziert wird. 10 Zudem bedeutet dies, dass die Line nicht mehr flach aus dem Knoten herausgeht, was sich wiederum beim Gehen auf der Line negativ auswirkt.

### Aufgabe der Erfindung

Aufgabe der Erfindung ist es, ein Set für die Installation einer Slackline mit Funktionselementen bereitzustellen, mit denen der Aufbau einer Slackline beziehungsweise eines Slacklinesystems vereinfacht wird.

### Lösung der Aufgabe

Die Lösung der erfindungsgemässen Aufgabe ergibt aus den kennzeichnenden Merkmalen des Anspruchs 1, jeweils in Zusammenwirkung mit den Merkmalen des zugehörigen Oberbegriffes.

### Vorteile der Erfindung

Die erfindungsgemässen Funktionselemente zum Aufnehmen von einem oder mehreren Bändern, die für Slacklinesets verwendet werden, weisen vorteilhaft die 30 Eigenschaft auf, dass sie universell einsetzbar und sehr einfach handzuhaben sind. Das eine Funktionselement besteht aus einem Grundkörper und einem Stegelement, wobei der Grundkörper eine Ausnehmung aufweist, die bei einem ringförmigen Körper ebenfalls ringförmig ist. Die Ausnehmung kann aber auch eckig ausgebildet sein..

Das andere Funktionselement hat dagegen einen Grundkörper, der nur teilweise ringförmig ist, d. h. er ist hakenförmig oder schnapphakenförmig ausgebildet.

Die jeweiligen Stegelemente, die ebenfalls Bestandteil der Funktionselemente sind, wirken mit dem jeweiligen Grundkörper zusammen.

Die Stegelemente sind jeweils an dem Aussenumfang der Grundkörper angeordnet, wobei der jeweilige Grundkörper mit dem jeweiligen Stegelement einstückig ausgebildet ist.

Ist der Grundkörper hakenförmig ausgebildet, so umfasst vorteilhafterweise die Hakenform ein Sicherungselement. Dieses Sicherungselement dient dazu, um zu verhindern, dass ein einmal von dem Haken aufgenommener Körper aus dem Haken herausgleitet.

Der Haken selbst ist selbstschliessend beziehungsweise schnappförmig ausgebildet und schnappt in seine Sicherungsposition zurück, sobald es von dem entsprechenden Körper passiert ist.

Weiterbildungen der Funktionselemente sehen vor, dass neben dem Grundkörper und dem mit dem Grundkörper verbundenen Stegelement solche Stegelemente vorgesehen sind, die zwei oder mehrere Stege beziehungsweise Ausnehmungen aufweisen. Das Stegelement dient dazu, ein Band aufzunehmen beziehungsweise dieses einzufädeln.

Weist hierbei ein Stegelement weitere Stege auf, die Teil des Stegelements sind, sodass drei Stege entstehen, so kann über eine spezielle Fädeltechnik eine Selbsthemmung des Bandes erreicht werden.

Bei drei oder mehr Stegen ist vorgesehen, neben dem Einbinden an die Rundschlinge auch das Aufnehmen einer Line vorzusehen.

Die Funktionselemente zeigen somit viele Vorteile, d. h. sie sind anpassbar, schnell lösbar und ermöglichen ein einfaches Ziehen und Spannen von Slacklines sowie die Festlegung an Fixpunkten.

Die Funktionselemente bieten hohe Sicherheit und ermöglichen es auch, beim Schrägziehen der Line beziehungsweise der Spannelemente trotzdem die Funktion der Selbsthemmung zu gewährleisten.

Die bevorzugte Ausführungsform des erfindungsgemäßen Sets für die Installation einer Slackline, besteht aus mindestens einem Rundschlingenset sowie der Line selbst und ausschliesslich aus zwei unterschiedliche Funktionselemente, nämlich einem Funktionselement, das aus einem Grundkörper und einem im Grundkörper verbundenen Stegelement besteht, wobei der Grundkörper an sich vollständig geschlossen ist und eine Ausnehmung aufweist (bevorzugt runder Grundkörper mit einer runden Ausnehmung) und ferner einem weiteren Funktionselement, das sich gegenüber dem ersten Funktionselement dadurch unterscheidet, dass der Grundkörper schnapphakenartig ausgebildet ist. Allein mit diesen beiden Funktionselementen kann auf sehr einfache und sichere Art und Weise eine Slackline zwischen zwei Fixpunkten, auch von einer Person alleine, aufgebaut werden.

Die erfindungsgemässen Funktionselemente bringen somit die Eigenschaft mit sich, dass Flachbänder über eine spezielle Fädeltechnik schnell, stufenlos, präzise sowie leichtgängig und übersichtlich in diese eingebunden werden können, sodass für Slacklines Rundschlingen zur Fixierung an Fixpunkten, wie beispielsweise Bäumen, bereitgestellt werden können.

Zusätzlich dient jeweils ein Funktionselement in seiner besonderen Ausführung dazu, einen Flaschenzug auszubilden, mit dem es möglich ist, die Line zu spannen.

Bei Verwendung eines Flaschenzuges ist es möglich, mit geringen Kräften eine Line, die sich auch über eine längere Strecke erstreckt, zu spannen.

Weitere vorteilhafte Ausgestaltungen gehen aus der nachfolgenden Beschreibung, den Ansprüchen sowie der Zeichnung hervor.

### Zeichnungen

**Es zeigen:**
- **Figur 1**: eine schematische Draufsicht auf ein an zwei Fixpunkten montiertes Slacklineset
- **Figur 3**: eine schematische Darstellung eines ersten Ausführungsbeispiels eines hakenförmigen Funktionselements für die Anbindung an einer Slackline;
- **Figur 4**: eine schematische Darstellung eines zweiten Ausführungsbeispiels eines hakenförmigen Funktionselements für die Anbindung an einer Slackline;
- **Figur 5**: eine prinzipielle Darstellung der Verwendung der Funktionselemente gemäss den Figuren 3 und 4 bei einer Slackline zur Montage an einem Fixpunkt;
- **Figur 6**: eine schematische Darstellung eines dritten Ausführungsbeispiels eines Funktionselements mit einem ösenartigen Grundkörper
- **Figur 7**: schematische Darstellung des Einsatzes des Funktionselements gemäss Figur 6 bei einem Flaschenzug zum Spannen einer Line;
- **Figur 8A-H**: eine jeweilige schematische Darstellung in der Anwendung der Funktionselemente.

### Beschreibung der Ausführungsbeispiele

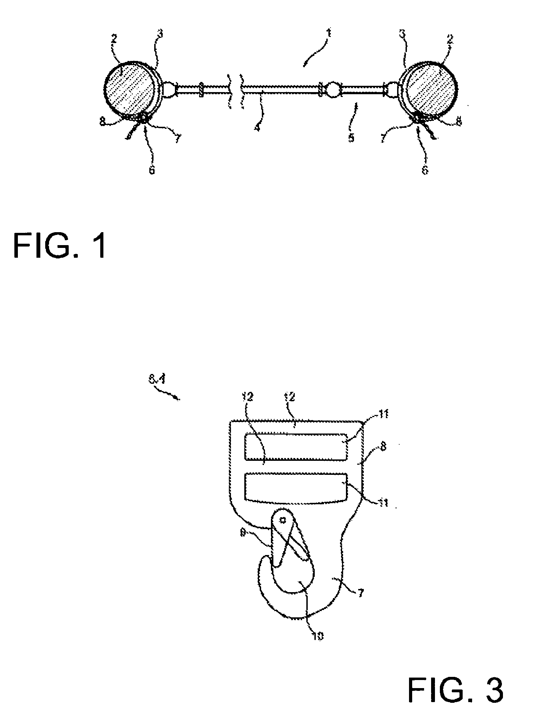

In Figur 1 ist schematisch eine Slackline 1 in Montage an zwei Fixpunkten 2 gezeigt. Die Slackline 1 umfasst im Wesentlichen die an den Fixpunkten 2 angeordneten Rundschlingen 3 sowie mit den Rundschlingen 3 gekoppelte Line 4.

Die Line 4 ist dafür vorgesehen, dass sie von einer Person zu begehen ist. In der Regel sind die Rundschlingen 3 an den Fixpunkten 2 derart angeordnet, dass die Line 4 oberhalb einer Bodenoberfläche im Abstand angeordnet ist.

Ferner umfasst die Slackline 1 ein Spannelement 5, welches bei dem hier dargestellten Ausführungsbeispiel als Flaschenzug ausgebildet ist.

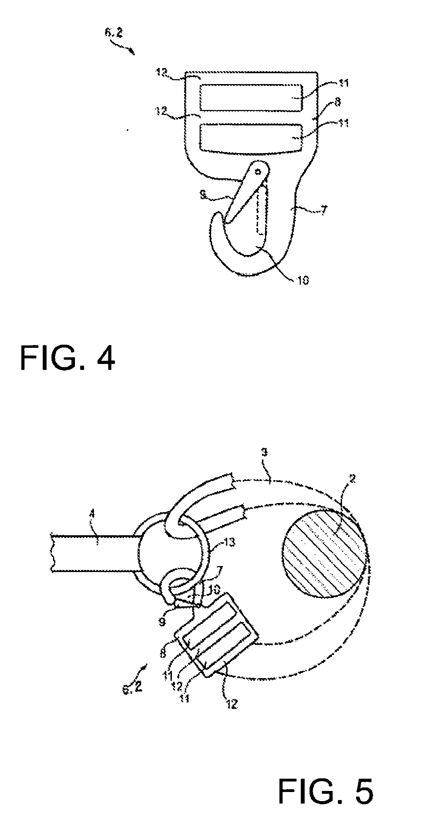

In den Figuren 3 und 4 sind Funktionselemente 6.1 und 6.2 dargestellt. Diese Funktionselemente 6.1 und 6.2 bestehen im Wesentlichen aus zwei Teilabschnitten, nämlich einem Grundkörper 7 sowie einem Stegelement 8. Beide Teilabschnitte sind bei den hier dargestellten Ausführungsbeispielen einstückig miteinander verbunden.

Der jeweilige Grundkörper 7 weist die Eigenschaft auf, dass er hakenförmig ausgebildet ist. Er weist wie die übrigen Funktionselemente 6 somit eine zumindest teilweise ausgestaltete Ausnehmung auf, die bei dem hier dargestellten Ausführungsbeispiel nahezu kreisrund ist. Die hakenförmige Ausbildung dieser Grundkörper 7 ist durch ein Schnappelement 9 verschlossen. Das Schnappelement 9 kann, wie in Figuren 3 und 4 dargestellt, im Wesentlichen zwei Positionen einnehmen, nämlich eine geschlossene Position, die derart wirkt, dass der Grundkörper 7 eine geschlossene Ausnehmung 10 aufweist, wohingegen bei geöffneter Position die Ausnehmung 10 teilweise geöffnet ist.

Die jeweiligen Stegelemente 8 selbst weisen zwei Aussparungen 11 auf, die jeweils von zwei Stegen 12 begrenzt sind.

In Fig. 5 ist ein Anwendungsbeispiel der erfindungsgemässen Ausführung des Funktionselements 6.2 gemäss der Fig. 4 dargestellt. Die Rundschlinge 3 selbst ist durch ein Ringelement 13 gefädelt und erstreckt sich an dem Fixpunkt 2 vorbei bis hin zu dem Funktionselement 6.2. Dort sind die freien Enden in das Stegelement 8 beziehungsweise die Aussparung 11 sowie Stege 12 eingefädelt. Die Fädelung ist derart vorgesehen, dass jederzeit an den freien Enden die Rundschlinge 3 in Bezug auf den Fixpunkt 2 gespannt werden kann. Aus Übersichtlichkeitsgründen ist die Rundschlinge 3 nur teilweise dargestellt.

Das Funktionselement 6.2 weist ferner den Grundkörper 7 auf, der ebenfalls mit dem Ringelement 13 über dessen hakenförmige Ausbildung 10 gekoppelt ist. Das Schnappelement 9 ist im geschlossenen Zustand. Die Line 4 selbst schliesst sich ebenfalls an das Ringelement 13 an. Somit ist eine vollständige Kopplung der Line 4 an den Fixpunkt 2 erfolgt, mit der Eigenschaft, dass die Line 4 jederzeit nachgespannt werden kann, indem die freien Enden der Rundschlinge 3 gespannt werden, ohne dass es notwendig ist, eine Entfädelung der freien Enden oder ein Lösen der Rundschlinge 3 vorzunehmen. Damit ist mit einem einzigen Funktionselement 6.2 sowie dem Ringelement 13 die Möglichkeit geschaffen worden, eine einfache und von einer Person aufzubauende Line 4 bereitzustellen.

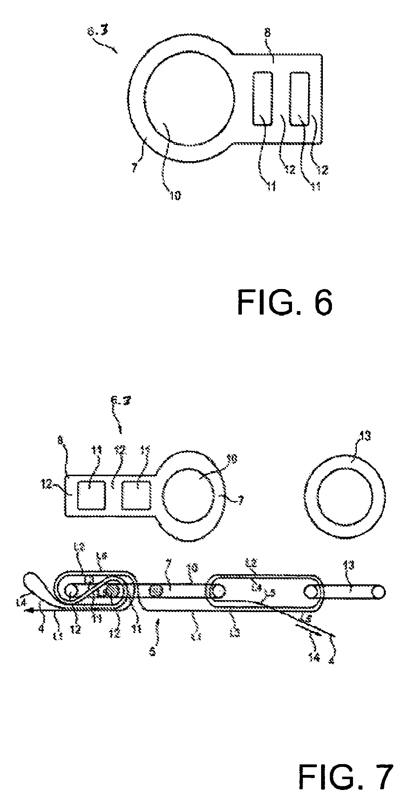

In Fig. 6 ist ein Funktionselements 6.3 dargestellt. Es versteht sich als Weiterbildung zu den Funktionselementen 6.1 und 6.2 die in den Figuren 3 und 4 dargestellt sind. Im Gegensatz zu dem in den Figuren 3 und 4 dargestellten Funktionselementen 6.1 und 6.2 weist dieses Funktionselement 6.3 einen Grundkörper 7 auf, der ringförmig ausgestaltet ist und in sich geschlossen ist. Ferner zeigt er eine Ausnehmung 10 auf, die ebenfalls ringförmig ausgestaltet ist. An dem ringförmigen Grundkörper 7 schliesst sich unmittelbar das Stegelement 8 an, welches, wie bei den Ausführungsbeispielen in Figuren 3 und 4 zwei Aussparungen 11 sowie Stege 12 aufweist. Das Stegelement 8 und der Grundkörper 7 sind einstückig ausgebildet.

In Fig. 7 ist schematisch als Installationsbeispiel die Darstellung des Funktionselements 6.3 gemäss Fig. 6 in der Ausbildung eines Spannelements 5 dargestellt. Das Ende einer Line 4 wird zunächst in das Funktionselement 6.3 eingebunden, indem er entlang der in Fig. 7 dargestellten Linie L1 die Line 4 in die erste Aussparung 11 des Stegelements 8 des Funktionselements 6.3 geführt wird. Entlang der Linie L3 und L4, welche als Schlaufenbildung dient, wird die Line 4 entlang der Linie L5 und L6 wiederum zurückgeführt, bis diese das hier verwendete Ringelement 1 3, das als Teil der Rundschlinge 3, wie sie in Figur 5 dargestellt ist, ausgebildet ist, geführt. Auch hier wird die Line 4 entlang der Linie L1 durch das Ringelement 13 sowie entlang der Linie L2 durch den Grundkörper 7 beziehungsweise dessen Ausnehmung 10 entlang der Linie L3 wieder zurück in das Ringelement 13 und wiederum zurück in den Grundkörper 7 geführt, wo es dann am Ende der Linie L5 ein freies Ende bildet. Dieses freie Ende dient dazu, dass an diesem in Pfeilrichtung 14 gezogen werden kann. Bei dem hier dargestellten Übersetzungsverhältnis 1:5 kann mit einer aufgebrachten Kraft die fünffache Kraft zur Spannung der Line 4 aufgebracht werden.

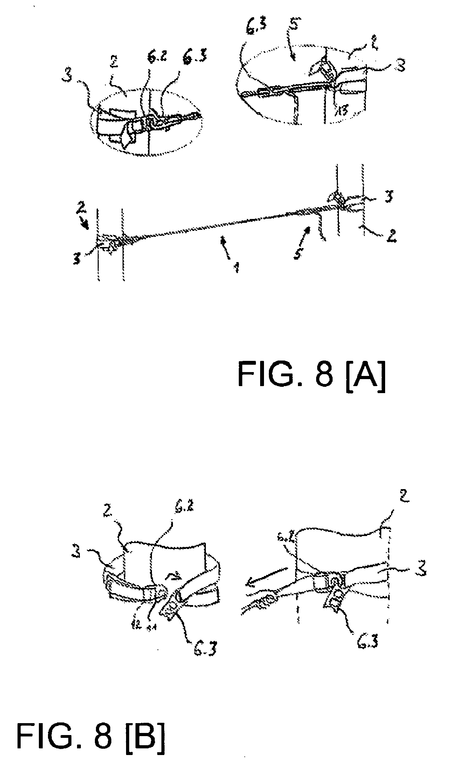

In den Figuren 8A-H wird anhand von Ausführungsbeispielen die Installation eines Slacklinesets unter der Verwendung der erfindungsgemässen Funktionselemente 6.2 und 6.3 sowie dem Ringelement 13 gezeigt,

Das Slacklinesystem 1, dass in den Figuren 8A-H dargestellt ist, basiert auf einem schon zuvor beschriebenen 5:1 Flaschenzug, der sich selbst hemmt. Die Befestigung der Line 4 erfolgt knotenlos nach einem nachfolgend in Fig. 8A beschriebenen so genannten Slack-Locker-Prinzip.

In Fig. 8A ist die erfindungsgemässe Slackline 1 dargestellt. Sie besteht aus zwei Fixpunkten 2, nämlich einem ersten Fixpunkt 2 und einem zweiten Fixpunkt 2, wobei an den jeweiligen Fixpunkten 2 Rundschlingen 3 vorgesehen sind. Über Funktionselemente 6.2 und 6.3 ist die Line 4 an den jeweiligen Rundschlingen 3 direkt oder indirekt angebracht. Um die entsprechende Spannung der Line 4 ausführen zu können, die die Line 4 begehbar macht, ist ein Spannelement 5 vorgesehen.

Bei der Installation der Slackline wird in einem ersten Schritt an dem ersten Fixpunkt 2, wie er in Fig. 8B dargestellt ist, die Rundschlinge 3 befestigt. Die Rundschlinge 3 besteht aus einem flachem Band, das auf seiner einen Seite durchgeschlauft das Funktionselement 6.3 gemäss der Darstellung in Fig.6 umfasst. Das freie Ende des flachen Bandes ist mit dem Funktionselement 6.2 versehen, das in Fig. 4 dargestellt ist. Sobald das freie Ende durch die Aussparung 11 beziehungsweise Steg 12 des in Fig. 4 dargestellten Funktionselement 6.2 durchgeschlauft ist, kann es in den Grundkörper 7 des Funktionselements 6.3 wie es in Fig. 6 dargestellt ist, eingeklemmt werden. Die freien Enden des Bandes dienen dann dazu, wie es in der weiteren Abbildung Fig. 8B dargestellt ist, diese zu ergreifen und in Pfeilrichtung zu ziehen, damit eine Verspannung mit dem ersten Fixpunkt 2 erfolgt.

Bevorzugterweise ist die Fixierung nicht derart auszuführen, dass die Rundschlinge 3 eng an dem Fixpunkt 2 anliegt, sondern dass ein Zwischenraum von ca. 10cm zurück dem Fixpunkt 2 und dem Band vorhanden ist.

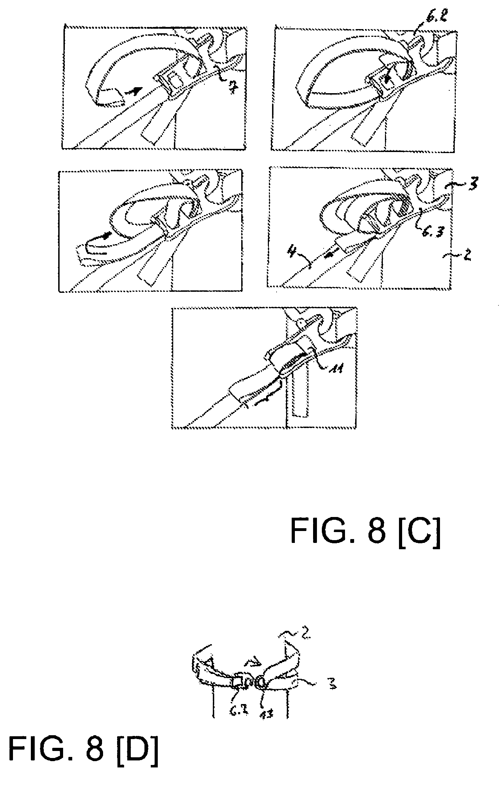

Die weitern Schritte, wie sie in Fig. 8C dargestellt sind, erfolgen zur Befestigung der Line 4 an dem Fixpunkt 2.

An dem ersten Fixpunkt 2 ist das Funktionselement 6.3 freihängend vorhanden, wie es in Fig. 6 dargestellt ist. Dieses Funktionselement 6.3 umfasst die entsprechenden Stege 12 beziehungsweise Aussparungen 11. Um ein Verbinden der Line 4 mit dem Funktionselement 6.3 zu ermöglichen, ist die Line 4 auf einer Seite mindestens ca. 50cm vor dem Ende der Line doppelt aufzunehmen und zweimal von unten durch die dem Grundkörper 7 zugewandte Ausnehmung 11 zu stecken (Schritt 1 und Schritt 2).

In einem weiteren Schritt ist vorgesehen, das doppelte Ende der Line 4 in die weitere Aussparung 11 in Pfeilrichtung einzuführen und wieder zurück in Pfeilrichtung in die erste Aussparung 11, die dem Grundkörper 7 zugewandt ist, einzuführen (Schritt 3).

Ist die Durchführung erfolgt, so wird das doppelte Ende der Line 4 in Pfeilrichtung weg von dem Fixpunkt 2 geführt. Die Befestigung an dem Funktionselement 6.3, wie es in Figur 8C (Schritt 5) dargestellt ist, ist nun erfolgt.

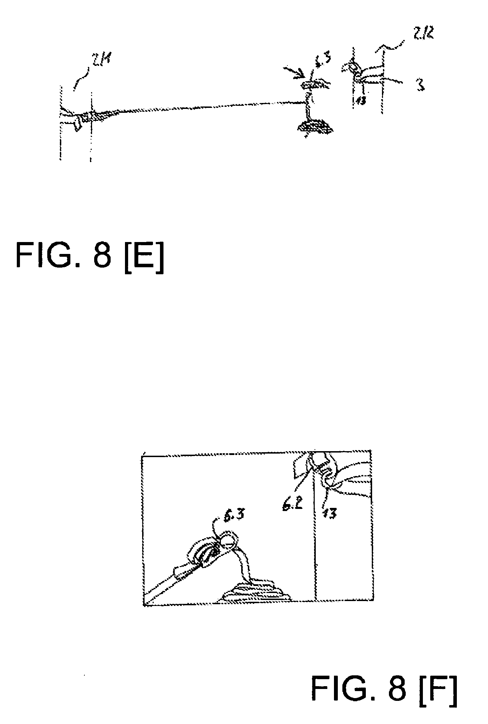

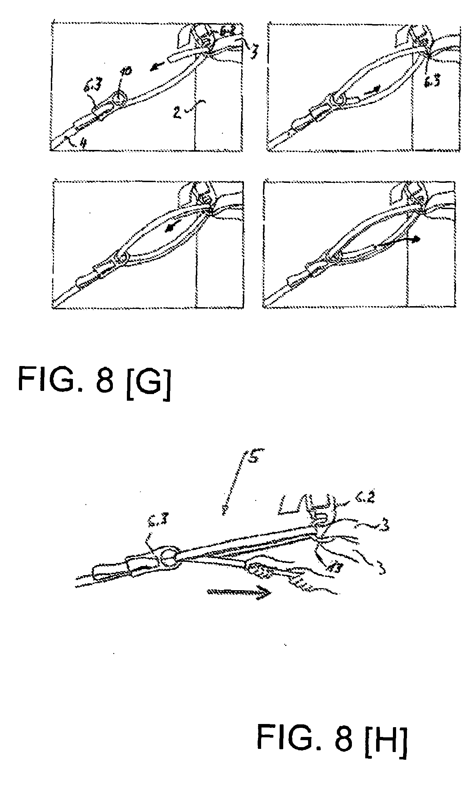

In einem weiteren Schritt (Fig. 7[D]) wird der zweite Fixpunkt 2 präpariert. Dieser Fixpunkt 2 besteht ebenfalls aus einer Rundschlinge 3, die das erfindungsgemässe Funktionselement 6.2 gemäss Fig. 4 an seinem freien Ende aufweist. Durchgeschlauft ist bei dieser zweiten Rundschlinge 3 auschliesslich ein Ringelement 13, wie es in Figur 7 dargestellt ist. Zur Befestigung wird auch hier wieder das Funktionselement 6.2 in den Grundkörper eingeklickt und anschliessend, so wie es auch in Figur 8[B] dargestellt ist, verspannt.]

Um die Line 4 nun mit dem zweiten Fixpunkt 2 zu verbinden, entsteht die in Figur 8[E] dargestellte Situation. Auf der einen Seite ist die Line 4 bereits fest mit dem Fixpunkt 2 verbunden. Das freie Ende wird nun ca. 1 m vor dem weiteren Fixpunkt 2 in das erfindungsgemässe Funktionselement 6.3, wie es in Fig. 6 dargestellt ist, eingeschlauft. Die Einschlaufung erfolgt identisch in der Art und Weise, wie es bereits in Fig. 8[C] dargestellt ist. Die in Fig.7 dargestellte Situation des Funktionselements 6.3 wird dadurch erreicht.

Zur Befestigung am Fixpunkt 2 ist es notwendig, das entsprechende Spannelement 5 zu erzeugen, wie es in Figur 8[F] bereits angedeutet ist. Dieses wird dadurch erreicht, dass wie in Figur 8[G] dargestellt, das freie Ende der Line 4 (Schritt 1) durch den Grundkörper 7 der Rundschlinge 3 an einem zweiten Fixpunkt 2 geführt wird, und zwar zweimal, wobei das freie Ende nach dem Durchführen durch den Grundkörper 7 die Führung des freien Endes der Line 4 durch die Ausnehmung 10 des Funktionselements 6.3 gemäss Fig. 6 zu führen ist. Dies wird durchgeführt, bis die wie in Figur 8[G] erreichte Situation (Schritt 4) erzielt ist. Beim Fädeln ist darauf zu achten, dass die jeweilige Line unter der zuvor gefädelten Line liegt.

Um das Spannelement 5, das nun die Funktion eines Flaschenzuges zeigt, zu spannen, wird das freie Ende in Pfeilrichtung (gemäss Figur 8[H]) gezogen.

Die Slackline 1 kann nun je nach Bedarf entsprechend gespannt werden. Durch einfaches Ziehen, kann der Flaschenzug betätigt werden, sodass nur mit 1/5 der an sich aufgebrachten Spannkraft eine Aufwendung betrieben werden muss.

Um den Abbau zu ermöglichen, ist es notwendig, das Spannelement 5 entsprechend zu entspannen. Mit dem freien Ende wird in einem entsprechenden Halbkreis in Richtung der Mitte der Slackline das freie Ende bewegt, sodass bewirkt wird, dass die jeweiligen Lines nicht mehr übereinander liegen. Dadurch tritt automatisch eine entsprechende Entspannung ein, da keine Hemmung mehr vorliegt.

Alternativ zu dem bereits in Figur 8[G] beziehungsweise 8[H] dargestellten Flaschenzug ist es auch möglich, den bereits zuvor aus dem Bergsport bekannten Express-Flaschenzug (ausgeführt mit Schäkeln) auszuführen.

Eine besondere Ausführungsform des Funktionselements6.3 sieht vor, dass die Aussparung 11, die dem Grundkörper 7 zugewandt ist, grösser ist, als diejenige Aussparung, die dem Grundkörper abgewandt ist, dies bringt den Vorteil mit sich, dass aufgrund der Dicke der entsprechenden Bänder, die aufeinander liegen, diese auch entsprechend von der Aussparung 11 aufgenommen werden können.

Alle zuvor genannten Funktionselemente 6.1-6.3 sind sind bevorzugterweise als Gussteil ausgebildet und können so in Serie kostengünstig hergestellt werden.

Die Funktionselemente 6.1-6.3 dienen auch dazu, Rundschlingen 3 auszubilden. Mit maximal zwei Bauelementen können auf sichere und einfache Art und Weise Slacklines 1 auch von nur einer Person aufgebaut und mit geringem Kraftaufwand gespannt werden.

### BEZUGSZEICHENLISTE

- 1: Slackline
- 2: Fixpunkte
- 3: Rundschlinge
- 4: Line
- 5: Spannelement
- 6: Funktionselement 6.1-6.3
- 7: Grundkörper
- 8: Stegelement
- 9: Schnappelement
- 10: Ausnehmung
- 11: Aussparung
- 12: Steg
- 13: Ringelement
- 14: Pfeilrichtung
- 15: freien Enden
- 16: Pfeilrichtung
- 17: Pfeil
- 18: Wangen
- L1: Linie
- L2: Linie
- L3: Linie
- L4: Linie
- L5: Linie
- L6: Linie

## Patentansprüche

1. Set für die Installation einer Slackline aus mindestens einem RundsChlingenset sowie der Line selbst mit Funktionselementen zur Aufnahme von einem oder mehreren Bänden, **dadurch** gekenntzeichnet, dass ausschließlich zwei Funktionselemente (6.1-6.3) vorgesehen sind, die jeweils einen Grundkörper (7) und ein Stegelement (8) besitzen, wobei die Funktionselemente (6.1-6.3) 16 derart unterschiedliche Grundkörper (7) aufweisen, dass diese zum einen vollkommen geschlossen mit einer Ausnehmung (6.3/10) und zum anderen hakenförmig (6.1; 6.2) mit einem Schnappelement (9) ausgebildet sind.

2. Set nach Anspruch 1, **dadurch gekennzeichnet, dass** der vollkommen geschlossene Grundkörper (7) -Ausnehmung (10)- kreisrund ausgebildet ist.

3. Set nach Anspruch 1, **dadurch gekennzeichnet, dass** die Stegelemente (8) mindestens zwei Aussparungen (11) aufweisen, die jeweils von zwei Stegen (12) begrenzt sind.

4. Set nach Anspruch 3, **dadurch gekennzeichnet, dass** bei den Funktionselementen (6.1; 6.2) diejenige Aussparung (11), die dem Grundkörper (7) zugewandt ist, größer ist, als diejenige Aussparung (11), die dem Grundkörper (7) abgewandt ist.

5. Set nach einem der vorhergehenden Ansprüche, **dadurch gekennzeichnet, dass** dieses zusätzlich zu den Funktionselementen (6.1-6.3) ein Ringelement (13) umfasst.

6. Set nach einem der vorhergehenden Ansprüche, **dadurch gekennzeichnet, dass** dies ein Spannelement (5) umfasst.

7. Set nach Anspruch 6, **dadurch gekennzeichnet, dass** als Spannelement (5) zum Spannen der Line (4) eines der Funktionselemente (6.1-6.3) dient, welches als Flaschenzug ausgebildet ist.

8. Set nach Anspruch 7, **dadurch gekennzeichnet, dass** die freien Enden eines Bandes, wie die einer Rundschlinge (3) oder einer Line (4) derart in das jeweilige Funktionselement (6.1 -6.3) einfädelbar sind, dass ein Spannen und Entspannen ohne ein Ausfädeln möglich ist.

## Claims

1. Set for the installation of a slackline, consisting of at least one round sling set and the line itself, having functional elements for holding one or more straps, **characterized in that** only two functional elements (6.1-6.3) are provided, each having a basic body (7) and a web element (8), wherein the functional elements (6.1-6.3) have such different basic bodies (7) that the latter are formed firstly in a completely closed manner with a cutout (6.3/10) and secondly in a hook-like manner (6.1; 6.2) with a snap element (9).

2. Set according to Claim 1, **characterized in that** the completely closed basic body (7) - cutout (10) - is formed in a circular manner.

3. Set according to Claim 1, **characterized in that** the web elements (8) have at least two cutouts (11) which are each bounded by two webs (12).

4. Set according to Claim 3, **characterized in that** in the functional elements (6.1; 6.2) that cutout (11) which faces the basic body (7) is larger than that cutout (11) which faces away from the basic body (7).

5. Set according to one of the preceding claims, **characterized in that** it comprises an annular element (13) in addition to the functional elements (6.1-6.3).

6. Set according to one of the preceding claims, **characterized in that** it comprises a tensioning element (5).

7. Set according to Claim 6, **characterized in that** one of the functional elements (6.1-6.3), which is in the form of a pulley, serves as the tensioning element (5) for tensioning the line (4).

8. Set according to Claim 7, **characterized in that** the free ends of a strap, such as those of a round sling (3) or of a line (4), can be threaded into the respective functional element (6.1-6.3) such that tensioning and loosening is possible without unthreading.

## Revendications

1. Ensemble pour l'installation d'un slackline composé d'au moins un ensemble de boucles rondes et de la ligne elle-même avec des éléments fonctionnels destinés à recevoir une ou plusieurs attaches, **caractérisé en ce qu'**il est prévu exclusivement deux éléments fonctionnels (6.1-6.3), qui comprennent respectivement un corps de base (7) et un élément de nervure (8), dans lequel les éléments fonctionnels (6.1-6.3) présentent 16 corps de base (7) différents de telle manière que ceux-ci soient d'une part entièrement fermés avec un évidement (6.3/10) et soient d'autre part réalisés en forme de crochets (6.1; 6.2) avec un élément à déclic (9).

2. Ensemble selon la revendication 1, **caractérisé en ce que** l'évidement (10) du corps de base (7) entièrement fermé est de forme circulaire.

3. Ensemble selon la revendication 1, **caractérisé en ce que** les éléments de nervure (8) présentent au moins deux découpes (11), qui sont chaque fois limitées par deux barrettes (12).

4. Ensemble selon la revendication 3, **caractérisé en ce que**, dans les éléments fonctionnels (6.1; 6.2), la découpe (11) qui est tournée vers le corps de base (7) est plus grande que la découpe (11) qui est détournée du corps de base (7).

5. Ensemble selon l'une quelconque des revendications précédentes, **caractérisé en ce que** celui-ci comprend un élément annulaire (13) en plus des éléments fonctionnels (6.1-6.3).

6. Ensemble selon l'une quelconque des revendications précédentes, **caractérisé en ce que** celui-ci comprend un élément de tension (5).

7. Ensemble selon la revendication 6, **caractérisé en ce que** l'élément de tension (5) sert pour tendre la ligne (4) d'un des éléments fonctionnels (6.1-6.3), qui se présente sous la forme d'un palan.

8. Ensemble selon la revendication 7, **caractérisé en ce que** les extrémités libres d'une attache, comme celle d'une boucle ronde (3) ou d'une ligne (4), peuvent être enfilées dans l'élément fonctionnel respectif (6.1-6.3), de telle manière qu'une tension et une détente soient possibles sans désenfilage.
